(19) Europäisches Patentamt

European Patent Office

Office européen des brevets

(11) **EP 1 212 879 B1**

(12) **FASCICULE DE BREVET EUROPEEN**

(45) Date de publication et mention
de la délivrance du brevet:
**01.12.2004 Bulletin 2004/49**

(51) Int Cl.⁷: **H04L 29/06**, G06F 9/445,
H04N 7/24, H04N 7/52,
H04L 12/18

(21) Numéro de dépôt: **00954862.9**

(22) Date de dépôt: **14.09.2000**

(86) Numéro de dépôt international:
**PCT/IB2000/001301**

(87) Numéro de publication internationale:
**WO 2001/022684 (29.03.2001 Gazette 2001/13)**

(54) **PROCEDE ET SYSTEME DE TRANSMISSION D'UNE CHAINE DE MESSAGES POUR BASE DE DONNEES**

VERFAHREN UND SYSTEM ZUR ÜBERTRAGUNG EINER MELDUNGSKETTE FÜR DATENBANKEN

METHOD AND SYSTEM FOR TRANSMITTING A CHAIN OF MESSAGES FOR DATABASE

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **17.09.1999 CH 171399**

(43) Date de publication de la demande:
**12.06.2002 Bulletin 2002/24**

(73) Titulaire: **Nagracard SA**
**1033 Cheseaux-sur-Lausanne (CH)**

(72) Inventeurs:
• **NICOLAS, Christophe**
**CH-1028 Préverenges (CH)**
• **HILL, Michael, John**
**CH-1296 Coppet (CH)**

(74) Mandataire: **Wenger, Joel-Théophile**
**Leman Consulting S.A.**
**62 route de Clementy**
**1260 Nyon (CH)**

(56) Documents cités:
**EP-A- 0 491 069       FR-A- 2 696 854**
**US-A- 5 497 418       US-A- 5 666 293**

## Description

La présente invention concerne un procédé et système de mise à jour de base de données, et en particulier lors de la transmission d'une chaîne de messages.

Dans un système comprenant un centre de gestion et une pluralité d'abonnés repartis sur un vaste territoire, il est connu d'envoyer par voie téléphonique ou hertzienne des informations de mise à jour de la base de données de ces abonnés. Ces messages s'adressent, soit à tous les abonnés, soit à un abonné particulier, c'est-à-dire qu'il contient une adresse de module d'abonné.

Ces messages sont destinés à l'administration du système et viennent se superposer aux données utiles telles que vidéo, audio ou données. On comprend bien que la place utilisée par ces messages est donc limitée. Une autre limitation s'applique à la longueur du message qui est limitée du fait que les données utiles ne peuvent être interrompues que pour un court instant. On comprend bien que, dans l'exemple d'une transmission audio/vidéo, le canal d'émission ne peut être interrompu que pour un très bref instant afin qu'aucun impact visuel ne soit perceptible.

C'est pour cela que, pour la transmission d'un grand nombre d'informations, il a été nécessaire de les fragmenter en un grand nombre de messages.

Ces messages sont envoyés séquentiellement sur le réseau, dans un ordre logique, c'est-à-dire les uns derrière les autres, séparés par un court intervalle, par exemple une seconde.

Du fait que certains systèmes de ce type n'utilisent pas de voie de retour vers le centre de gestion, comme une liaison modem par exemple, il est difficile pour le centre de gestion de savoir si les informations envoyées sont arrivées correctement. De ce fait, il est contraint de répéter ces messages périodiquement afin de statistiquement s'assurer que chaque message est bien arrivé à destination.

Un module d'abonnés comprend schématiquement un récepteur numérique, soit audio, soit vidéo ou de données, voire une combinaison de ces trois types, un décodeur en charge de séparer les messages d'administration, ces derniers étant aiguillés vers un module de sécurité comprenant la base de données d'abonnés. Ce module de sécurité peut être directement monté dans le module d'abonné ou, pour des raisons de sécurité et de coût, il peut se présenter sous la forme d'un module détachable tel qu'une carte intelligente ou carte à puce.

Les messages arrivant au module de sécurité sont traités par l'interpréteur de commandes. Il se peut que les messages n'arrivent pas dans l'ordre d'émission du fait de perturbations dans la transmission ou simplement du fait que l'unité d'abonnés n'était pas enclenchée lors de l'envoi des messages précédents. Il faut préciser que préalablement à un traitement, chaque message est d'abord décrypté et contrôlé quant à son authenticité. Un message qui ne remplit pas les critères de contrôle est rejeté. Dans cette hypothèse, le module de sécurité recevra par exemple le message indice 3 avant les messages indices 1 et 2. L'exécution du message indice 3 sans l'exécution préalable des deux messages précédents peut conduire à des blocages de la base de données ou à une erreur quelconque.

Une première solution consiste à mémoriser tous les messages constituant une chaîne et, lorsqu'elle est complète, de procéder à son traitement. Cette solution a l'inconvénient de définir la longueur de la chaîne maximum en fonction de la mémoire disponible.

La capacité mémoire des cartes intelligentes détachables est limitée, ce qui oblige la carte à traiter chaque message dès son arrivée.

Le document FR-A-2 696 854 propose l'organisation interne d'une carte à puce recevant des messages d'administration. Chaque message met à jour une partie de la base de données relationnelle que constituent la carte à puce et une unité centrale de gestion. Le document diffère de la présente invention en ce que chaque message a un lien logique avec au moins un autre message.

Le doument EP-A-0 491 069 décrit une méthode d'envoi de messages à différents décodeurs. Il ne fait pas d'allusion à l'envoi d'une chaine de messages dans lequel certains éléments seraient reliés aux autres. Il peut donc être considéré comme arrière plan technologique de la présente demande.

Le problème que se propose de résoudre la présente invention est de supprimer sur la base de données d'abonnés les effets néfastes dû à l'exécution des messages dans un ordre différent de celui initialement prévu.

Ce but est pleinement atteint par un procédé de transmission d'une chaîne de messages d'administration de base de données d'abonnés, procédé consistant à adjoindre un bloc conditionnel qui détermine si le message est à traiter sans référence à tout ou partie des autres membres de la chaîne ou les conditions liées au traitement préalable de tout ou partie des autres membres de la chaîne.

En effet, grâce à ce nouveau bloc conditionnel inclus dans chaque message membre d'une chaîne, il est possible de déterminer si ce message peut être traité isolement ou doit satisfaire à des conditions de traitement sur les messages censés être reçus préalablement. Il va de soit que ce test permet également de déterminer si le message en cours d'évaluation a déjà été traité.

Pour atteindre ce but, le module de sécurité dispose d'une mémoire organisée sous forme de table indiquant, pour chaque chaîne quels sont les messages membres de cette chaîne ayant déjà fait l'objet d'un traitement. Après traitement de tous les membres de la chaîne, la table de cette chaîne est conservée afin d'éviter que le renvoi de la même chaîne relance son exécution. Elle peut être effacée sur demande du centre de gestion ou après un temps prédéfini.

Le bloc conditionnel contenu dans le message ne contient pas seulement une indication simple liant le traitement du message en cours à la condition d'avoir exécuté le message précédent, mais couvre également des fonctions plus complexes telles que des conditions sur chaque membre de la chaîne de message. Par exemple, il est possible de soumettre le traitement du membre 4 de la chaîne à la condition que soit le membre 1 ou 2 soit traité et que le membre 3 soit impérativement traité. Nous aurons donc la fonction :

$$F(4) = (1 \text{ ou } 2) \text{ et } 3.$$

Prenons l'exemple de l'arrivée au module de sécurité du message membre de la famille 5, ce message étant le membre 4 de cette famille. La première opération sera de déterminer si son traitement est soumis à d'autres conditions. Si tel n'est pas le cas, il pourra être traité immédiatement. Il est à noter que le fait de chaîner des messages ne veut pas forcément dire que le traitement doit se faire dans l'ordre d'indice de la chaîne. On peut imaginer le cas où l'on charge un logiciel de taille importante, et pour cette raison, on le fractionne pour le transmettre en une chaîne de message. Chacun de ces messages contient une adresse de chargement et les données correspondantes. C'est pourquoi un membre de la chaîne peut être traité dans un ordre indifférent. Par contre, le dernier membre de la chaîne mettant en service ce nouveau logiciel contiendra une condition stipulant que tous les membres de la chaîne doivent avoir été exécutés pour que celui-ci puisse être exécuté. à son tour. Lorsque cette condition est remplie, la table correspondant à cette famille indique que tous les messages sont exécutées.

Selon une variante de l'invention, le bloc conditionnel est divisé en deux parties, l'une dite "opération" pour décrire le type de fonction logique et l'autre dite "membre concerné" pour décrire sur quels autres membres l'opération doit s'appliquer. Le format de la partie "membre concerné" correspond au format utilisé dans la table stockée dans la base de données désignant l'état de traitement des membres de la chaîne. De ce fait, la comparaison logique en est grandement facilitée.

Selon d'autres formes de réalisation, le bloc conditionnel se réfère non pas à tous les autres membres de la chaîne mais à certains seulement. Il serait par exemple possible de se référer aux trois éléments précédents et non pas à tous les éléments. Ceci permet de diminuer la longueur du bloc conditionnel et tient compte du fait qu'une perturbation dépasse rarement le temps de trois messages. Suivant un autre exemple, on pourrait définir une structure de chaîne où seulement le dernier élément contient un bloc conditionnel.

Cette structure permet, contrairement aux solutions de l'état de la technique, de ne rejeter qu'un minimum de message. En effet, lorsqu'un message manquait dans une chaîne, tous les messages suivants étaient rejetés jusqu'au nouveau passage du message manquant. L'exécution d'une chaîne était de ce fait tributaire de la réception continue des membres de la chaîne, chaque élément manquant ayant pour conséquence de rejeter tous les messages d'indice supérieur au message manquant.

Selon une forme de réalisation de l'invention, le module d'abonné, parallèlement à l'envoi des messages au module de sécurité, comprend une mémoire pour les mémoriser au fur et à mesure de leur arrivée.

Il se peut donc que l'absence d'un message contenant une condition sur un message précédant conduise à rejeter tous les messages suivants. Quand ce message attendu arrive, il est bien entendu traité autorisant le traitement des autres messages. Il se peut par contre que beaucoup de temps s'écoule avant que ceux-ci soient présents dans la transmission avec le risque que certains soient rejetés, par exemple à cause de la mauvaise qualité de la liaison entre le centre de gestion et le module d'abonné.

Pour diminuer au maximum le nombre de répétition de messages nécessaire pour que la chaîne soit enfin exécutée dans son entier, le module de sécurité peut accéder à la mémoire située dans le module d'abonné car elle contient tous les messages dans leur ordre d'arrivée. Ainsi, sitôt l'arrivée du message manquant et son traitement achevé, le module de sécurité va demander la lecture de la mémoire pour traiter tous les messages qui ont été rejeté à cause de la condition sur le message manquant.

Un aspect important de l'invention réside dans le fait de présenter chaque message au module de sécurité parallèlement au stockage en mémoire dans le module d'abonné. Ce principe peut comporter des exceptions dans le cas ou certains messages ne sont pas destinés au module de sécurité mais uniquement au module de l'abonné. Ainsi, bien que certains messages sont rejetés par le module de sécurité du fait que les conditions ne sont pas remplies, celui-ci sait que ce message est contenu dans la mémoire du module d'abonné et pourra, dès que la condition est remplie, accéder à la mémoire pour exécuter ces messages au lieu d'attendre un prochain passage des messages suivants.

Dans une forme d'exécution, la mémoire du module d'abonné est organisée comme une pile à entrée série, chaque nouvelle entrée provoquant le déplacement de l'entrée précédente.

La lecture par le module de sécurité peut s'effectuer de différentes manières. Il peut demander la transmission d'une adresse précise de la mémoire. Néanmoins, un aspect important de la sécurité dans ce type d'application réside dans la confidentialité de l'organisation des informations. Pour cela, au lieu de demander la transmission d'une adresse spécifique, le module de sécurité va demander au module d'abonné de lui présenter tout ou partie des messages contenu dans sa mémoire. A charge du module de sécurité de trier entre les messages déjà exécutés et les messages à exécuter.

L'invention sera mieux comprise grâce à la description détaillée qui va suivre et qui se réfère aux dessins annexés qui sont donnés à titre d'exemple nullement limitatif, dans lesquels :

- La figure 1 représente un message tel qu'envoyé dans les systèmes de l'état de la technique;

- La figure 2 représente un message tel qu'envoyé selon l'invention;

- La figure 3 représente un exemple d'implémentation de la mémoire temporaire du module d'abonné.

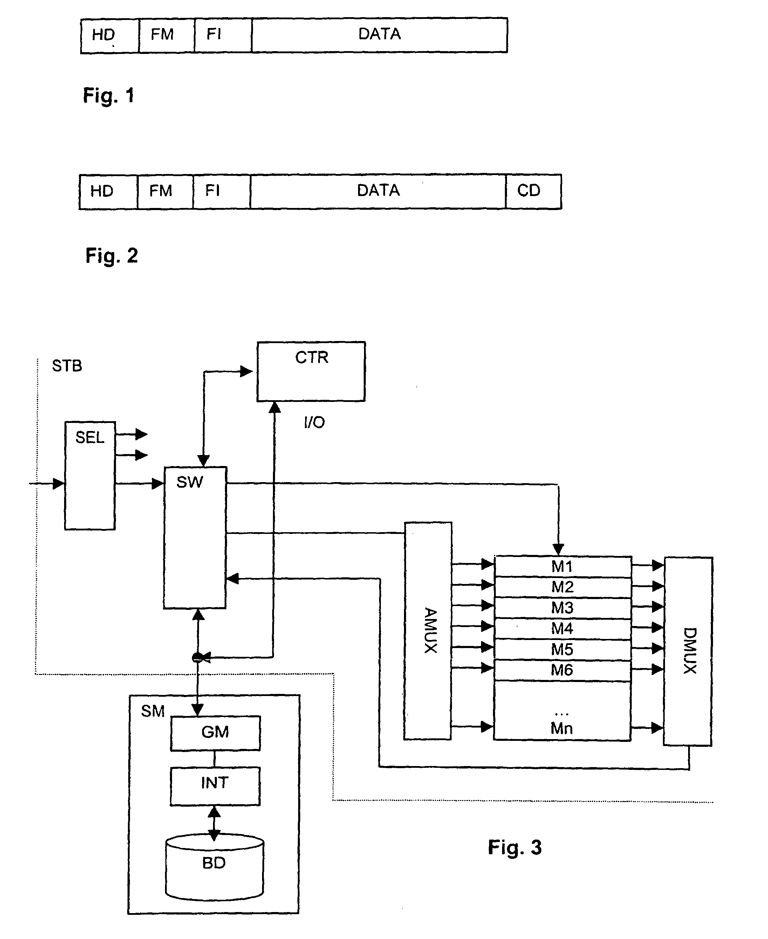

Sur la figure 1 sont représentés schématiquement les différents blocs d'un message qui participent à la fonction de chaînage. Nous trouvons un premier bloc en-tête HD qui décrit le type de message, et contient l'information que ce message fait partie d'une chaîne. Pour former la chaîne, un deuxième bloc de famille FM indique à quelle famille ce message appartient. En effet, il est possible que plusieurs chaînes soient transmises simultanément et l'identification de la famille est nécessaire. Maintenant que la famille est définie, le bloc suivant FI sert à identifier chaque membre de la famille et sa place dans la chaîne. Ainsi, par ces deux informations, chaque membre de la famille pourra être remis bout à bout avec les autres membres de la même famille si nécessaire. Il est connu d'indiquer dans l'un ou l'autre des blocs de contrôle FI ou FM le nombre maximum de membre de la famille. Cette fonction peut également être obtenue par un marquage particulier du dernier membre de la famille.

Sur l'exemple de la figure 2, le message de la figure 1, mettant en oeuvre les deux blocs FM et FI, se voit adjoindre un bloc supplémentaire CD qui détermine une condition d'exécution de ce message. Selon une première forme d'exécution de l'invention, ce bloc est constitué d'un bit qui indique si le message précédent doit ou ne doit pas avoir été exécuté. Si cette condition est demandée, l'interpréteur en charge des opérations sur la base de données, vérifiera si le message précédent a bien été exécuté et exécutera ce nouveau message.

Dans une autre forme d'exécution, ce bloc conditionnel CD est constitué par un champ composé de groupes, un groupe pour chaque membre de la chaîne. Chaque groupe contient une condition sur un élément de la chaîne et peut avoir plusieurs significations, par exemple la condition "doit avoir été exécuté", "peut avoir été exécuté" ou "ne doit pas avoir été exécuté". Cette dernière condition est en général le miroir de la première.

Prenons l'exemple d'une chaîne de 6 éléments, l'élément 3 devant forcément être exécuté avant l'élément 5. Dans ce cas, on peut spécifier dans le message 3 qu'il ne doit pas être exécuté si le message 5 l'a été. Cette condition peut conduire à un blocage si l'on ne spécifie pas la condition inverse dans le message 5. Dans ce cas, le message 5 contiendra la condition "doit avoir été exécuté" sur le message 3 pour que si le message 5 arrivait avant le 3, il ne soit pas traité.

Sur la figure 3, est représenté une implémentation de la mémoire M du module d'abonné et la liaison avec le module de sécurité. Le flux entrant est tout d'abord filtré par un module SEL qui a pour but de séparer les messages d'administration des autres données. Ces messages sont ensuite transmis au module de sélection SW qui a pour tâche de les envoyer aux différents modules c'est-à-dire le module de sécurité SM, au centre de traitement CTR du module d'abonné STB et à la mémoire M du module d'abonné. La mise en mémoire de ces messages provoque l'incrémentation du pointeur de messages entrants afin qu'aucun message ne soit perdu, le message le plus ancien étant alors éliminé de la mémoire. En parallèle, ces messages sont transmis au module de sécurité, représenté ici comme une carte intelligente SM. Cette carte SM contient un premier module de gestion de mémoire GM et un interpréteur INT de commande destinés à la gestion des commandes de la base de données BD. Ce gestionnaire de mémoire GM peut dialoguer avec le centre de traitement CTR par la liaison I/O et par ce moyen, influencer les connexions dans le module de sélection SW. La ligne pointillée représentée sur la figure 3 représente le module d'abonné STB. Tous les messages d'administration adressés au module de sécurité SM sont dirigés par le sélecteur SW au module de sécurité, en particulier au gestionnaire de mémoire GM puis sont transmis à l'interpréteur de commande si les conditions d'exécution sont remplies. Le gestionnaire de mémoire GM tient à jour la table des messages exécutés pour effectuer les nécessaires comparaisons lors de l'arrivée d'un nouveau message. La liaison avec la carte intelligente SM est de type entrée/sortie et de ce fait des informations et commandes peuvent être envoyées à destination du module d'abonné, connexion représentée par la ligne I/O. Comme expliqué plus haut, la mémoire M est physiquement dans l'unité d'abonné STB. C'est pourquoi la carte SM peut, par l'intermédiaire de la ligne I/O, demander la disponibilité d'une section mémoire afin de pouvoir stocker les messages d'une chaîne. Dans notre exemple, le nombre maximum d'éléments dans une chaîne n'excède pas 16. Ainsi, à l'arrivée du premier membre de la chaîne, la carte SM, par la ligne I/O, demande la réservation d'au moins 16 places mémoire. Si, pendant la transmission de cette première chaîne, une autre chaîne est annoncée, la carte demandera la réservation de 16 nouvelles places afin d'assurer le stockage d'un maximum de membres de la chaîne selon les conditions de réception.

Afin de lire les informations contenues dans la mémoire M, par exemple la position M3, la carte SM peut commander, via le sélecteur SW, au multiplexeur d'adresses AMUX de lui retourner le contenu de cette position mémoire. Afin d'acheminer ces données vers la carte, un multiplexeur de données DMUX a pour fonction de lire la position mémoire requise et de la transférer vers la carte. Ces divers transferts sont aiguillés par le sélecteur SW.

Lorsque l'exécution de la chaîne a été interrompue par la faute d'une perturbation sur un message par exemple, les autres messages continuent à être stockés dans la mémoire du module d'abonné. Lorsque le message manquant est retransmis par le centre de gestion, il est bien évidemment exécuté et le gestionnaire de mémoire GM va rappeler tous les autres messages de la chaîne en accédant la mémoire du module d'abonné. Dans ce cas, l'entrée de la carte intelligente SM ne se fait plus sur l'arrivée des messages mais sur le contenu de la mémoire M. Cet accès à la mémoire M peut se faire soit en accès direct en spécifiant une adresse mémoire, soit par accès séquentiel en lisant les messages dans leur ordre d'arrivée.

Dans une forme d'exécution, la mémoire M est organisée comme une mémoire tampon d'une longueur fixée selon la disponibilité de la mémoire libre du module d'abonné. Cette mémoire comprend un pointeur d'entrée incrémenté à chaque introduction de message dans la mémoire, et un pointeur de sortie incrémenté à chaque lecture par le gestionnaire de mémoire GM.

La possibilité de dialogue entre la carte SM et le module d'abonné STB, en particulier le centre CTR, autorise des fonctions plus élaborées. Un des problèmes fréquemment rencontré lors de l'échange de l'un ou l'autre des éléments du système, soit la carte ou le module d'abonné, est d'assurer la compatibilité des fonctions avec le matériel de générations précédentes. Pour cela, il est intéressant de faire dialoguer les différents éléments entre eux afin d'établir les fonctions disponibles dans chacun de ceux-ci; c'est le but de la ligne I/O qui permet d'envoyer des instructions de la carte au module d'abonné. Ces instructions peuvent, par exemple, demander au module d'abonné de communiquer ses fonctions audio, vidéo ou données, la génération de module ou la version logiciel. Pour répondre à cette requête, le module STB dispose de moyens pour composer un message d'administration et le transmettre, soit dans la mémoire M pour lecture ultérieure par la carte, soit directement à la carte, tel que représenté sur la figure 3.

Selon une autre forme de réalisation de l'invention, le module STB dispose d'une connexion par modem avec le centre de gestion. Dans ce cas, l'annonce de ressources peut se faire par le module STB au centre de gestion via le modem, sur requête du module de sécurité SM.

Comme indiqué sur la figure 3, le module STB reçoit également les messages d'administration venant du centre de gestion. Les messages arrivant au centre de traitement CTR peuvent contenir une instruction de requête de configuration. La réponse pourra se faire par la liaison modem ou être transmise à la carte SM. Certains de ces messages d'administration sont uniquement destinés au module STB et le centre de traitement CTR, responsable de la gestion du module STB, ne va pas les transmettre au module de sécurité SM ou à la mémoire M.

## Revendications

1. Procédé de transmission de chaîne de messages d'administration de base de données entre un centre de gestion et une pluralité de bases de données d'abonné réparties, chaque message d'administration comprenant un en-téte de chaîne (HD), un identificateur de chaîne (FM) permettant la transmission simultanée de plusieurs chaînes et un indice de chaîne (FI) permettant d'identifier le message dans la chaîne, caractérisé en qu'il consiste à adjoindre à chaque message un bloc conditionnel (CD) qui détermine si ce message est à traiter sans références à tout ou partie des membres de la chaîne ou à traiter selon des conditions liées au traitement préalable de tout ou partie des membres de la chaîne.

2. Procédé de transmission selon la revendication 1, caractérisé en qu'il consiste à déterminer selon le bloc conditionnel (CD) si tout ou partie des membres de la chaîne peut, ou doit, ou ne doit pas avoir été traité préalablement.

3. Procédé de transmission selon la revendication 1 ou 2, caractérisé en qu'il consiste à gérer une table au sein de la base de données d'abonné contenant une information représentant l'état de traitement de chaque membre de la chaîne, et à mettre à jour ladite table chaque fois qu'un membre de la chaîne est traité, et de réinitialiser ladite table soit sur requête du centre de gestion, soit après un temps prédéfini.

4. Procédé de transmission selon les revendications 1 à 3, **caractérisé en ce que** la base de données d'abonné est reliée à une unité d'abonné et **en ce qu'**il consiste à mémoriser les messages d'administration dans une mémoire de l'unité d'abonné et de les présenter sur demande à la base de données.

5. Procédé de transmission selon la revendication 4, **caractérisé en ce qu'**il consiste à mémoriser en mode "série" les messages entrant, chaque message entrant provoquant l'incrémentation d'un pointeur de la pile de messages entrants, et à accéder en accès direct les messages demandés par la base de données.

6. Procédé de transmission selon la revendication 4, **caractérisé en ce qu'**il consiste à utiliser la mémoire de l'unité d'abonné fonctionnant comme mémoire tampon série à longueur fixe.

7. Procédé de transmission selon les revendications 4 à 6, **caractérisé en ce qu'**il consiste à recevoir dans la base de données, un message membre d'une chaîne, et de réserver auprès de l'unité d'abonné la mémoire nécessaire à la réception de tous les membres de la chaîne.

8. Procédé de transmission selon les revendications 4 à 7, caractérisé en qu'il consiste, sur requête, à faire composer par le module d'abonné un message d'administration décrivant ses ressources logiciels et matériel et à envoyer ledit message, soit à la base de données (SM), soit au centre de gestion.

9. Procédé de transmission selon la revendication 8, **caractérisé en ce que** cette requête est transmise, soit par le centre de gestion sous la forme d'un message d'administration, soit par la base de données (SM) sous la forme d'une instruction par la ligne I/O.

10. Système de transmission de chaîne de messages d'administration de base de données comprenant un centre de gestion et une pluralité d'unités d'abonnés, chaque unité comprenant une base de données, chaque message comprenant un en-tête (HD), un identificateur de chaîne (FM) permettant la transmission simultanée de plusieurs chaînes, et un indice de chaîne (FI) permettant d'identifier le message dans la chaîne, **caractérisé en ce qu'**il comprend un bloc conditionnel (CD) qui détermine si le message est à traiter sans référence à tout ou partie des membres de la chaîne, ou à traiter selon des conditions liées au traitement préalable de tout ou partie des membres de la chaîne.

11. Système de transmission de chaîne de messages selon la revendication 10, caractérisé en que le bloc conditionnel (CD) contient une condition déterminant si tout ou partie des membres de la chaîne peut, ou doit, ou ne doit pas avoir été traité préalablement.

12. Système de transmission de chaîne de messages selon les revendications 10 et 11, **caractérisé en ce que** le module de sécurité (SM) comprend un gestionnaire de message (GM) en charge de stocker dans une mémoire l'état du traitement de chaque message de la chaîne, et qu'il comprend des moyens de comparaison de cet état avec les conditions énoncées dans le bloc conditionnel (CD) du message en cours de traitement.

13. Système de transmission de chaîne de messages selon les revendications 10 à 12, **caractérisé en ce que** l'unité d'abonné comprend une mémoire (M) de messages, chaque message entrant provoquant le déplacement du message précédent dans la mémoire (M), et **en ce que** le module de sécurité (SM) comprend des moyens pour lire et traiter ces messages.

14. Système de transmission de chaîne de messages selon les revendications 10 à 13, **caractérisé en ce que** l'unité d'abonné (STB) comprend une ligne de liaison (I/O) vers le module de sécurité (SM) et qu'il comprend des moyens pour déterminer la taille de la mémoire (M) selon les instructions reçues de la part du module de sécurité (SM), et pour répondre par la composition et l'envoi d'un message d'administration au module de sécurité (SM).

15. Système de transmission de chaîne de messages selon les revendications 10 à 13, **caractérisé en ce que** l'unité d'abonné (STB) comprend un module de sélection (SW) permettant de connecter le séparateur de messages d'administration (SEL), le centre de traitement (CTR) du module d'abonné, le module de sécurité (SM) et la mémoire (M), et des moyens pour reconnaître les messages d'administration destinés uniquement au centre de traitement (CTR), et aiguiller par le module de sélection (SW) ces messages uniquement vers le centre de traitement (CTR).

**Patentansprüche**

1. Verfahren zur Übermittlung einer Kette von Verwaltungsnachrichten für eine Datenbank zwischen einem Verwaltungszentrum und einer Mehrzahl von Datenbanken von verstreuten Teilnehmern, wobei jede Verwaltungsnachricht einen Kettenheader (HD), eine Kettenkennung (FM), die die gleichzeitige Übermittlung mehrerer Ketten ermöglicht, sowie einen Kettenindex (FI), der eine Identifizierung der Nachricht in der Kette ermöglicht, umfasst, **dadurch gekennzeichnet, dass** es darin besteht, zu jeder Nachricht einen Zustandsblock (CD) hinzuzufügen, der festlegt, ob diese Nachricht ohne Bezugnahme auf alle oder einen Teil der Glieder der Kette zu verarbeiten ist oder ob sie gemäss Bedingungen zu verarbeiten ist, die an die vorausgehende Verarbeitung aller oder eines Teiles der Glieder der Kette gebunden sind.

2. Verfahren der Übermittlung gemäss Anspruch 1, **dadurch gekennzeichnet, dass** es darin besteht, gemäss Zustandsblock (CD) festzulegen, ob alle oder ein Teil der Glieder der Kette im Voraus verarbeitet worden sein können, sein müssen oder nicht sein dürfen.

**3.** Verfahren der Übermittlung gemäss Anspruch 1 oder 2, **dadurch gekennzeichnet, dass** es darin besteht, eine Tabelle in der Datenbank des Teilnehmers zu verwalten, die Information enthält, die den Zustand der Verarbeitung jedes Gliedes der Kette repräsentiert, und diese Tabelle jedesmal zu aktualisieren, wenn ein Mitglied der Kette verarbeitet wird, sowie diese Tabelle entweder auf Anforderung des Verwaltungszentrums oder nach Ablauf einer im Voraus definierten Zeit neu zu initialisieren.

**4.** Verfahren der Übermittlung gemäss Ansprüchen 1 bis 3, **dadurch gekennzeichnet, dass** die Datenbank des Teilnehmers mit einer Teilnehmereinheit verbunden wird, und dadurch, dass es darin besteht, die Verwaltungsnachrichten in einem Speicher der Teilnehmereinheit zu speichern und sie der Datenbank auf Verlangen darzubieten.

**5.** Verfahren der Übermittlung gemäss Anspruch 4, **dadurch gekennzeichnet**, das es darin besteht, die eintreffenden Nachrichten seriell zu speichern, wobei jede eintreffende Nachricht die Inkrementierung eines Zeigers des Stapels eintreffender Nachrichten bewirkt, und direkt auf die von der Datenbank angeforderten Daten zuzugreifen.

**6.** Verfahren der Übermittlung nach Anspruch 4, **dadurch gekennzeichnet, dass** es darin besteht, den Speicher der Teilnehmereinheit als seriellen Pufferspeicher festgelegter Länge zu nutzen.

**7.** Verfahren der Übermittlung gemäss Ansprüchen 4 bis 6, **dadurch gekennzeichnet, dass** es darin besteht, in der Datenbank eine Nachricht, die Glied einer Kette ist, zu empfangen und bei der Teilnehmereinheit den Speicherplatz zu reservieren, der für den Empfang aller Glieder der Kette erforderlich ist.

**8.** Verfahren der Übermittlung gemäss Ansprüchen 4 bis 7, **dadurch gekennzeichnet, dass** es darin besteht, auf Anforderung hin durch den Teilnehmermodul eine Verwaltungsnachricht formulieren zu lassen, die seine Software- und Hardwareressourcen beschreibt, und diese Nachricht entweder an die Datenbank (SM) oder an das Verwaltungszentrum zu schicken.

**9.** Verfahren der Übermittlung gemäss Anspruch 8, **dadurch gekennzeichnet, dass** diese Anforderung entweder durch das Verwaltungszentrum in Gestalt einer Verwaltungsnachricht oder durch die Datenbank (SM) in Gestalt eines Befehls über die I/O-Leitung übermittelt wird.

**10.** System der Übermittlung einer Kette von Verwaltungsnachrichten für eine Datenbank, ein Verwaltungszentrum und eine Mehrzahl von Teilnehmereinheiten umfassend, wobei jede Einheit eine Datenbank umfasst und jede Nachricht einen Header (HD), eine Kettenkennung (FM), die die gleichzeitige Übermittlung mehrerer Ketten ermöglicht, sowie einen Kettenindex (FI), der es ermöglicht, die Nachricht in der Kette zu identifizieren, umfasst, **dadurch gekennzeichnet, dass** es einen Zustandsblock (CD) umfasst, der festlegt, ob die Nachricht ohne Bezugnahme auf alle oder einen Teil der Glieder der Kette zu verarbeiten ist oder ob sie gemäss Bedingungen zu verarbeiten ist, die an die vorausgehende Verarbeitung aller oder eines Teiles der Glieder der Kette gebunden sind.

**11.** System der Übermittlung einer Kette von Nachrichten gemäss Anspruch 10, **dadurch gekennzeichnet, dass** der Zustandsblock (CD) eine Bedingung enthält, die festlegt, ob alle oder ein Teil der Glieder der Kette im Voraus verarbeitet worden sein können, sein müssen oder nicht sein dürfen.

**12.** System der Übermittlung einer Kette von Nachrichten gemäss Ansprüchen 10 und 11, **dadurch gekennzeichnet, dass** der Sicherheitsmodul (SM) einen Nachrichtenverwalter (GM) umfasst, der die Aufgabe hat, in einem Speicher den Zustand der Verarbeitung jeder Nachricht der Kette zu speichern, und der Mittel für den Vergleich dieses Zustands mit den Bedingungen umfasst, die im Zustandsblock (CD) der in Verarbeitung befindlichen Nachricht ausgesprochen werden.

**13.** System der Übermittlung einer Kette von Nachrichten gemäss Ansprüchen 10 bis 12, **dadurch gekennzeichnet, dass** die Teilnehmereinheit einen Nachrichtenspeicher (M) umfasst, wobei jede eintreffende Nachricht die Verschiebung der vorangehenden Nachricht im Speicher (M) bewirkt, und dadurch, dass der Sicherheitsmodul (SM) Mittel umfasst, um diese Nachrichten auszulesen und zu verarbeiten.

**14.** System der Übermittlung einer Kette von Nachrichten gemäss Ansprüchen 10 bis 13, **dadurch gekennzeichnet, dass** die Teilnehmereinheit (STB) eine Verbindungsleitung (I/O) zum Sicherheitsmodul (SM) umfasst und dass es Mittel umfasst, um den Umfang des Speicherplatzes (M) in Übereinstimmung mit Befehlen festzulegen, die vom Sicherheitsmodul (SM) empfangen wurden, und um durch Formulierung und Absenden einer Verwaltungsnachricht zum Sicherheitsmodul (SM) zu antworten.

**15.** System der Übermittlung einer Kette von Nachrichten gemäss Ansprüchen 10 bis 13, **dadurch gekennzeichnet, dass** die Teilnehmereinheit (STB) einen Auswahlmodul (SW) umfasst, der es ermöglicht, den Abtrenner von Verwaltungsnachrichten (SEL), das Verarbeitungszentrum (CTR) des Teilnehmermoduls, den Sicherheitsmodul (SM) und den Speicher (M) anzuschliessen, sowie Mittel, um die Verwaltungsnachrichten zu erkennen, die nur für das Verarbeitungszentrum (CTR) bestimmt sind, und diese Nachrichten über den Auswahlmodul (SW) nur zum Verarbeitungszentrum (CTR) hin zu lenken.

## Claims

1. Method of transmission of chain of database management messages between a management centre and a plurality of subscriber databases, each management message comprising a chain header (HD), a chain identifier (FM) allowing the simultaneous transmission of several chains and a chain index (FI) allowing to identify the message in the chain, **characterized in that** it consists in adding to each message a conditional block (CD) which determines if this message is to be processed without references to all or part of elements of the chain or to be processed according to the conditions linked to the previous processing of all or part of elements of the chain.

2. Method of transmission according to claim 1, **characterised in that** it consists in determining according to the conditional block (CD) if all or part of elements of the chain can, or must, or must not have been processed first.

3. Method of transmission according to claim 1 or 2, **characterized in that** it consists in managing a table to the heart of the subscriber database containing a piece of information representing the processing state of each element of the chain, and to update said table every time that an element of the chain is processed, and to restart said table either on request of the managing centre, or after a predefined time.

4. Method of transmission according to claims 1 to 3, **characterised in that** the subscriber database is linked to a subscriber unit and **in that** it consists in memorising the management messages in a memory of the subscriber unit and to present them on request to the database.

5. Method of transmission according to claim 4, **characterised in that** it consists in memorising in series the incoming messages, each incoming message causing the increasing of a stack pointer of incoming messages, and to allow a direct access of the messages asked from the database.

6. Method of transmission according to claim 4, **characterised in that** it consists in using the memory of the subscriber unit working as a serial memory buffer in a fixed length.

7. Method of transmission according to claims 4 to 6, **characterised in that** it consists in receiving in the database, a message element of a chain, and to allocate in the subscriber unit, the memory necessary for receiving all the elements of the chain.

8. Method of transmission according to claims 4 to 7, **characterised in that** it consists, on request, to allow the composition by the subscriber module of a managing message describing its software and hardware resources and in sending said message, either to the database (SM), or to the management centre.

9. Method of transmission according to claim 8, **characterised in that** this request is transmitted, either by the management centre under the form of a management message, or by the database (SM) under the form of an instruction by the I/O line.

10. Transmission system of chain of managing database messages comprising a management centre and a plurality of subscriber's unit, each unit comprising a database, each message comprising a header (HD), a chain identifier (FM) allowing the simultaneous transmission of several chains, and a chain index (FI) allowing to identify the message in the chain, **characterised in that** it includes a conditional block (CD) which determines if the message has to be processed without reference to all or part of the elements of the chain, or to be processed according to conditions linked to the previous processing of all or part of elements of the chain.

11. Transmission system of chain of messages according to claim 10, **characterised in that** the conditional block (CD) contains a condition determining if all or part of the elements of the chain can, or must, or must not have been processed first.

12. Transmission system of chain of messages according to claims 10 and 11, **characterised in that** the security module (SM) includes a message manager (GM) able to store in a memory the state of the processing of each message of the chain, and that it includes comparison means of this state with the conditions mentioned in the conditional block (CD) of the message in processing.

13. Transmission system of chain of messages according to claims 10 to 12, **characterised in that** the subscriber unit includes a memory (M) of messages, each incoming message causing the displacement of the previous message in the memory (M), and **in that** the security module (SM) includes means to read and process these messages.

14. Transmission system of chain of messages according to claims 10 to 13, **characterised in that** the subscriber unit (STB) includes a connection line (I/O) towards the security module (SM) and that it includes means to determine the size of the memory (M) according to the instructions received from the security module (SM), and to answer about the composition and the sending of a managing message to the security module (SM).

15. Transmission system of chain of messages according to claims 10 to 13, **characterised in that** the subscriber unit (STB) includes a selection module (SW) allowing to connect the separator of management messages (SEL), the processing centre (CTR) of the subscriber module, the security module (SM) and the memory (M), and means to recognise the management messages destined only to the processing centre (CTR), and switching by the selection module (SW) these messages only towards the processing centre (CTR).

| HD | FM | FI | DATA |
|----|----|----|------|

**Fig. 1**

| HD | FM | FI | DATA | CD |
|----|----|----|------|----|

**Fig. 2**

STB

SEL

CTR

I/O

SW

AMUX

M1
M2
M3
M4
M5
M6
...
Mn

DMUX

SM

GM

INT

BD

**Fig. 3**